# EUROPEAN PATENT APPLICATION

(11) **EP 1 657 892 A1**
(43) Date of publication of application: **17.05.2006**
(21) Application number: 04026709.8
(22) Date of filing: 10.11.2004
(51) Int. Cl.: H04M 1/57, H04S 1/00

(54) **Three dimensional audio announcement of caller identification**

(71) Applicant: SIEMENS AKTIENGESELLSCHAFT, 80333 München (DE)
(72) Inventor: Pedersen, Jens Erik, 9000 Alborg (DK)

(57) **Abstract**

A method comprises the steps of:
- receiving an identifier (MSISDN; GROUP) defining an originating or destination party for a communication connection or a group to which the originating or destination party of the communication connection belongs; and
- selecting a sound reproduction position (r) responsive to the identifier (MSISDN; GROUP).

The method may further comprise the step of generating a digital representation (S') of a paging signal (Sr) or a voice signal (Sp) used for the communication connection by applying a head-related transfer function (HRTF) with the sound reproduction position (r).

## Description

### Background art

A telephone alerts the user in order to make him or her aware that a communication connection could be received. Traditionally, such alerting is performed by generating a ringer sound, and a typical example of a communication connection is an incoming call.

If a communication connection is about to be established at a telephone, the communication network may transmit an identifier to the telephone indicating the originating party of the communication connection. In many cases, this identifier can be displayed to the user of the telephone.

Some telephones offer the user a possibility to store identifiers identifying other telephones or subscribers, together with names which the user associates to them in order to facilitate not only choosing the recipient for an outgoing communication connection but also recognizing the identity of the party originating the communicating connection, since for most humans it is easier to recognize a name than a telephone number. The telephone can be adapted to compare the identifier indicating the originating party - such as the calling number - with a list of stored identifier - name pairs. Some telephones can therefore, when a communication connection is being established or ongoing, display the stored name of the calling subscriber or of the conversation party. Then the user can check this information simply by having a look at the display of the telephone.

Many modern telephones have a large number of different features. One feature popular especially among younger users is known as changeable ringing tones. A telephone may be customized at least up to some extent by selecting, composing or downloading ringing tones.

Ringing tones vary from monophonic (such as beeper-like) through polyphonic to stereophonic ringing tones. The quality in which they will be perceived by humans usually depends on the sound reproduction capabilities of a particular telephone.

In some telephones, ringing tones can be selected for phonebook entries or groups of such entries. This facilitates the user to recognize who is calling, or to which group the caller belongs to, even without needing to look at the display.

### Summary of the invention

A user of a telephone may be provided with a new way to customize the telephone or to improve his or her ability to distinguish between calling parties. This objective can be achieved with a method, program product or with a telephone as set out in corresponding independent patent claims.

The dependent patent claims describe various advantageous embodiments of the invention.

### Advantages of the invention

By using the invention, personalization of a telephone may be improved.

The user may be in a better position to distinguish between different originating parties or groups in which they belong when a sound reproduction position is selected responsive to an identifier identifying an originating party or a group to which the originating party belongs.

In addition or as alternative to this, the feeling of customization can be improved by selecting a sound reproduction position responsive to an identifier identifying a destination party or a group to which the destination party belongs.

If a digital representation of a paging signal or a voice signal used for a communication connection is generated by applying a head-related transfer function with said sound reproduction position to the paging signal or voice signal, the resulting psychoacoustic effect may be very impressing when the representation is then listened through at least two-channel headphones. By wirelessly transmitting this to headphones, the user's mobility is not compromised.

With means for defining and storing a relationship between an identifier defining an originating or destination party for a communication connection or a group to which the originating or destination party of the communication connection belongs, and a sound reproduction position, there is less need for transmitting said information to or from network. Furthermore, defining such a relationship may be left to the user.

Furthermore, with means for visualizing said relationship, the user may be in a better position to modify or define the relationship.

If a sound reproduction position is transmitted to a communication network, the applying of a head-related transfer function with a sound reproduction position to a paging or voice signal does not need to be performed at the transmitting telephone but can be performed at the receiving telephone or in a communication network. Furthermore, the voice can be transmitted using a one-channel representation, thus resulting in reduced complexity and savings in the amount of data to be transmitted.

If a sound reproduction position is received from a communication network, the applying of a head-related transfer function to a paging or voice signal can be performed at the receiving telephone. Since the selection of the head-related transfer function has an impact to the quality in which the user perceives the representation of the signal, the quality or user comfort can be improved since in this manner it is possible to use a head-related transfer function stored at the receiving telephone, tested by and suitable for the user of the telephone.

If a representation of a paging or voice signal to which a head-related transfer function with the reproduction has been applied is transmitted to a communication network, the signal processing required by head-related transfer function can be performed before using any specific telephony coding, e.g. before using a speech codec (such as Enhanced Full Rate for GSM) or before performing the Pulse Code Modulation for PSTN or ISDN). This apparently results in a better quality, but a slight drawback is that a codec for transmitting the representation of the signal has then to be transmitted for at least two channels, this easily requiring some more bandwidth.

If a representation of paging signal or voice signal is received from a communication network, this enables a relatively simple construction of the telephone, since the head-related transfer function can be omitted from the telephone.

### List of drawings

In the following, the invention is described in more detail with reference to examples shown in the accompanying drawings in Figures 1 to 7, of which:
Figure 1A shows an example of a location of a sound source in head coordinates;
Figure 1B illustrates a user wearing headphones;
Figure 2A illustrates settings for a caller group;
Figure 2B illustrates settings for a phone book entry;
Figure 3 shows some functional blocks of a telephone;
Figure 4 is a flow chart illustrating operation of a telephone according to the invention;
Figure 5 is a signalling diagram showing two telephones in communication with each other over a communications network;
Figure 6 illustrates different operations processing the signal; and
Figure 7 a possible operation of the processing unit is illustrated in more detail.

Same reference symbols refer to similar features throughout the drawings.

### Detailed description

Some current development work of the applicant is directed to bringing out a telephone that can be used by a user wearing at least two-channel headphones (e.g. stereo headphones). The telephone is adapted to pass an at least two-channel (e.g. stereo) signal to the headphones, preferably over a wireless link.

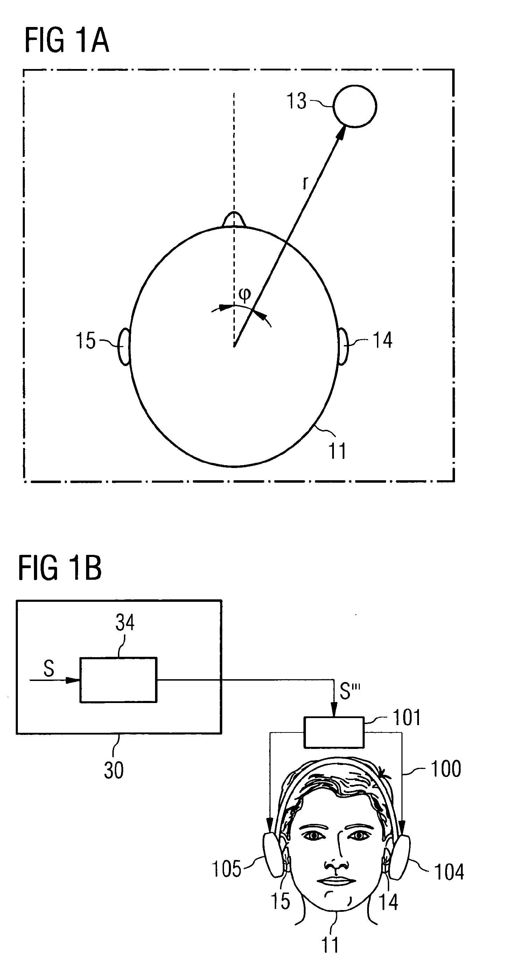

Figure 1A shows an example of head coordinates in one plane. A sound source 13 is located in at distance r at angle φ from the middle of the head 11 of the head of a person. The acoustic conditions of the room are denoted with e, mostly resulting from echo and background noise. As we know from the daily life, a person can observe the position (direction and distance) of the sound source 13 with a rather good precision. The skilled person readily understands that a 3D space outside the user's head could be covered by adding a third angle θ so that a location could be expressed in spherical coordinates.

Progress in computational sciences and acoustic field theory has opened interesting possibilities in sound technology. As a practical example of new technologies, a tool relatively new on the market is a program product that can be used to create an impression of position of a source of an audio signal when a user listens a representation of the audio signal through at least two channel headphones.

In practice, when such a tool is run in a processor in a form of a program, the audio signal will be passed through a head-related transfer function (HRTF) in order to generate, for a user wearing at least two channel (e.g. stereo) headphones, a psychoacoustic impression of the audio signal arriving from a predefined position.

The mechanism how the psychoacoustic impression is created can be illustrated by way of an example also shown in Figure 1B illustrating the head 11 of a user of a telephone wearing at least two-channel (e.g. stereo) headphones 100 adapted to convert a representation S"' of an audio signal S to sound. The headphones 100 comprise at least two acoustic transducers (such as speakers).

As we know from the daily life, a person can observe the position r (bold denotes here a vector which may be expressed with r, φ, and θ in spherical coordinates) of a sound source 13 with a rather good precision. So if sound is emitted by a sound source 13 located close to the left ear 15 (r=30 cm, φ = 3π/2, θ=0), it is first receipted by the left ear 15 and only a fraction of a second later by the right ear 14. Now if an audio signal is reproduced through headphones first to the left ear 15 and the fraction of a second later by the right ear 14 through headphones 100, which can be performed by applying a head-related transfer function with the respective sound reproduction position, the listener gets an impression of the sound source 13 being located close to the left ear 15.

A more thorough discussion of different properties of a HRTF and how it can be obtained can be found e.g. in published US patent application 2004/0136538 A1, and in references mentioned therein.

So if a suitable HRTF with sound reproduction position r is applied to an audio signal S, thus causing suitable phase differences or attenuation (possibly in a frequency-dependent manner), by listening a reproduction of the representation S"' of the audio signal S (after D/A conversion, amplifying and filtering) the user will get an impression that the sound source 13 is located at the sound reproduction position r.

Sound reproduction position r is a vector and can be defined as a position vector in any coordinate system, e.g. in polar or spherical coordinates. For spherical coordinates, coordinate points would be r, φ, and θ.

On one hand, an HRTF as described in the '538 application can be used in order to carry out the present invention if a high-quality 3D impression is desired. Would this approach be adapted, the HRTF should preferably be stored in the telephone. Since one telephone may have several users (e.g. members of a family), the telephone may therefore could comprise a larger number of HRTFs, one for each user. The selection of the HRTF that is to be used can be selected e.g. based on a code entered to the telephone by the user. Alternatively, the selection can be based on an identifier identifying of the headphones 100, if users prefer to use their personal headphones.

On the other hand, a simpler method for defining the HRTF will do, especially if 2D reproduction of the sound image is enough. This is becoming increasingly simple, since suitable program modules are already available on the market.

With term "2D reproduction of the sound source", direction of the sound source 13 would approximately be located in one level, preferably in the ear level of the user. With "3D reproduction of the sound source", the sound source 13 can be located also below or above this level.

The location of the sound source 13 as in Figure 1A may be almost deliberately chosen in the electronic device 30, e.g. in its processing unit 34, by selecting a sound reproduction position r that is used by the HRTF to modify its filtering characteristics. As an alternative, separate HRTFs can be used (one for each sound reproduction position r), then the HRTF to be used is changed when the sound reproduction position r changes.

A general HRTF can also be used for all users. An especially suitable HRTF of that kind is one that has been recorded using a head and torso simulator. The HRTF is then preferably stored for a large selection of angles around the head. In order to obtain a resolution of two degrees, 180 HRTF positions should be stored. In order to obtain a resolution of 5 degrees, 72 HRTF positions should be stored, for 2D reproduction of the sound source. To control the distance further HRTF positions are preferably needed.

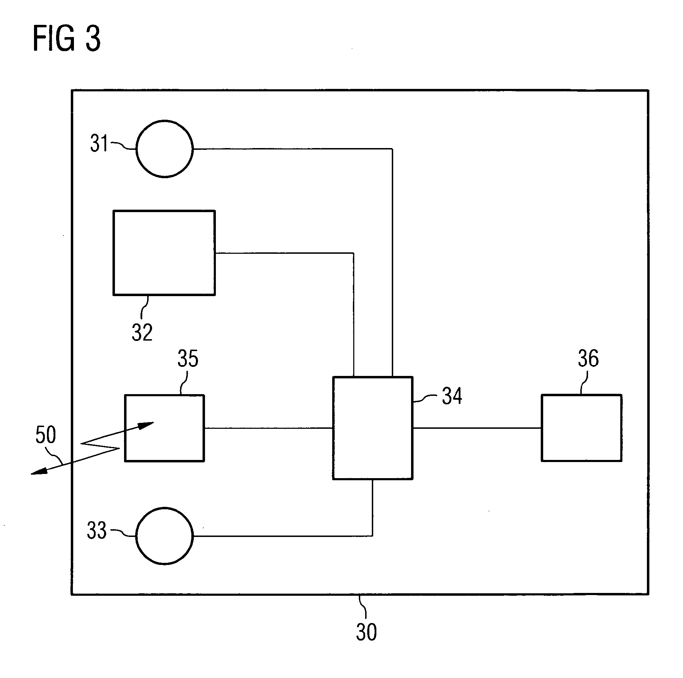

Figure 3 shows some functional blocks of a telephone 30. The telephone 30 comprises means 35 for receiving and transmitting data to/from communications network 50. The data transmission between the telephone 30 and the communications network 50 may take place over a wireless interface or an electrical interface. An example of the former is the air interface of a cellular communications network, especially a GSM network, and of the latter a tranditional interface of a Public Switched Telephony Network PSTN.

The telephone 30 further comprises input/output means 32 for operating the telephone 30. Input/output means 32 may comprise a keypad and/or joystick that is preferably suitable for dialling a number or selecting a destination address or name from a phonebook stored in the memory 36, the keypad preferably further comprising a dial toggle and answer button. The input/output means 32 may further comprise a display.

Furthermore, the telephone 30 comprises means 33 for receiving speech of the user of the telephone 30 and means 31 for paging a user or for reproducing an audio signal received from the communications network to the user of the telephone 30.

In a traditional telephone, means for paging a user or for communicating an audio signal received from the communications network to the user of the telephone comprises an acoustic transducer, e.g. a loudspeaker.

A telephone 30 according to the invention may comprise such an acoustic transducer, but in order to enable using headphones 100, the means 31 for paging a user or for reproducing an audio signal received from the communications network 50 to the user are adapted to pass a paging signal Sr or a reproduction of an audio signal received from the communications network to headphones 100. This can be done e.g. by using a wireless link, such as Bluetooth.

Means 33 for receiving speech of the user of the telephone 30 can be an acoustic transducer, e.g. a microphone, or they can be adapted to receive a signal from headphones 100 which then comprises an acoustic transducer for receiving speech. The transmission of user speech from headphones 100 to telephone 30 can be done e.g. by using a wireless link, such as Bluetooth. As an alternative, a cable comprising one or two pairs of copper wires can be used.

Last but not least, the telephone 30 comprises a processing unit 34, such as a microprocessor, and memory 36. The processing unit 34 is adapted to read program as executable code and then to execute it. The program is usually stored in the memory 36.

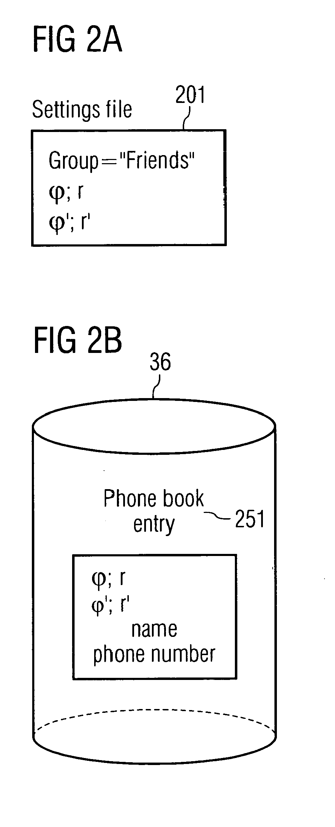

Figure 2A illustrates settings for a caller group. The settings for a caller group can be stored in settings file 201 that is preferably stored in memory 36. The settings file 201 would comprise a name of the group, such as "FRIENDS", "FAMILY", "COLLEAGUES", or "VIP". For each group there can be a predefined sound reproduction position r that is to be used for a paging signal Sr or for a voice signal Sp used for a communication connection. The sound reproduction position r can be selected when a member of the group is originating a communication connection or when the member corresponds to a destination address.

Furthermore, in the settings file 201 there may be a time rate of change dr/dt for the sound reproduction position r. For example, the sound source 13 can be made to rotate around the user in a level.

Figure 2B illustrates settings of a phone book entry 251. The phone book entry 251 comprises name and an identifier (e.g. phone number) defining a network address by using which another telephone can be reached.

Furthermore, the phonebook entry 251 comprises the sound reproduction position r, and optionally time rate of change dr/dt for the sound reproduction position r.

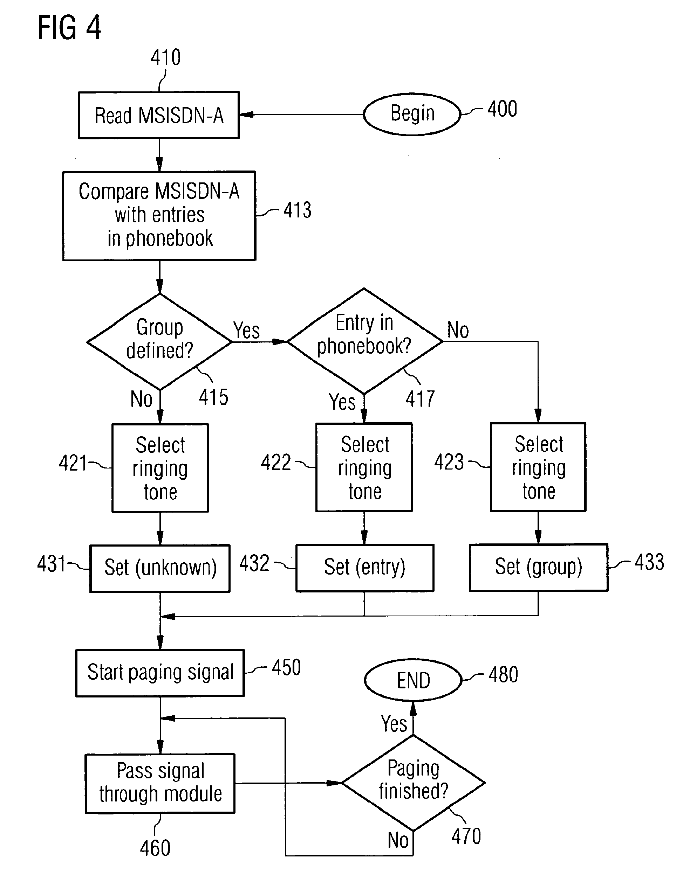

Figure 4 is a flow chart showing the operation of the processing unit 34 of the telephone 30, triggered when the telephone 30 receives a paging message from the communication network 50. The processing unit 34 has been adapted to execute program code that preferably has been delivered or sold to a customer in form of a program product 70. Therefore the program product 70 preferably comprises means that, after installing the program product 70 into a telephone 30 allow performing of at least some of the method steps shown in Figure 4.

When the telephone 30 is being paged (step 400), the processing unit 34 of the telephone 30 receives in step 410 the address MSISDN-A of the telephone from which the communication connection is being originated. The address can be e.g. Mobile Station International Subscriber Digital Number or in the form of any other phone number, following the definitions of ITU E.164 specifications, for example, or an Internet Protocol IP address.

In step 413 the processing unit 34 compares the address MSISDN-A with phonebook entries 251 stored in memory 36 and in settings file 201.

If in step 415 it is detected that for the address MSISDN-A there is no group defined, in step 421 a ringing tone for an unknown number is selected. In step 431 the sound reproduction position r that is used for an unknown number is selected.

The processing unit reproduces in step 450 the selected paging signal Sr (such as ringing tone) by passing it through a program module in the processing unit 34 that applies the HRTF (step 460) with the sound reproduction position r to it generating a digital representation S' for at least two channels (left and right). The digital representation S' is then converted to an analog signal, amplified and possibly filtered by appropriate components in the telephone 30. As a playback option, headphones 100 as described above can be used, for which reason the telephone 30 may be adapted to broadcast the representation S"'.

If in step 415 it was detected that for the address MSISDN-A there was a group defined, in step 417 the address MSISDN-A is compared with phonebook entries 251. If there is no phonebook entry 251 corresponding to the address MSISDN-A, in step 423 a ringing tone for the group is selected. In step 433 the sound reproduction position r that is used for the group is selected, after which the paging signal Sr is reproduced in steps 450 and 460 in the manner described above.

If in step 417 it was detected that there is a phonebook entry 251 corresponding to the address MSISDN-A, in step 432 the sound reproduction position r defined for the phone book entry 251 is selected, after which the paging signal Sr is reproduced in steps 450 and 460 in the manner described above.

A digital representation S' of the paging signal Sr is generated by the the processing unit 34 by applying the HRTF with the sound reproduction position r as long as the paging is finished (which is checked in step 470). In step 480 the paging has terminated, i.e. the user has either received or rejected the communication connection, the initiating party has terminated establishing the connection, or the communication network has detected a timeout (e.g. because of no answer at the telephone 30).

An analogous principle can be applied to a voice signal Sp used for a communication connection as was above described for a paging signal Sr. A particular example of such a voice signal Sp is the speech of the user.

That is, steps equal to steps 431, 432 or 433 can be performed at the beginning of the communication connection, and instead of starting the ringing tone in step 450, voice received from the communication network can be passed through the program module in the processing unit 36, generating digital representation S' (step 460) by applying the HRTF with the sound reproduction position r, after which the representation S"' can be played back or broadcasted.

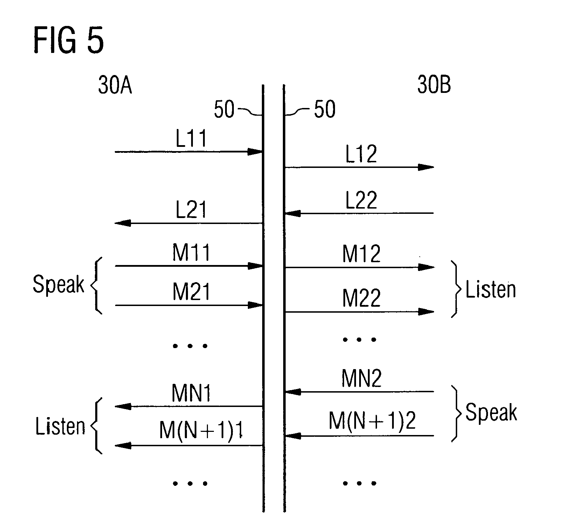

Figure 5 is a signalling diagram showing two telephones 30A, 30B in communication with each other over a communications network 50. The signalling diagram of Figure 5 is a simplified example of a communication connection that could take place in a cellular network. Analogous principle would apply to a fixed communications network, especially to the PSTN.

In order to initiate a communication connection, originating telephone 30A sends call message L11 to network 50 which sends paging message L12 to destination telephone 30B. If the destination telephone 30B accepts the call, it sends a positive acknowledgement message L22 to the network 50 which further acknowledges initiating telephone 30A by sending a positive acknowledgement message L21.

When the user of the originating telephone 30A speaks, his or her speech is coded and then transmitted in small blocks M11, M21, ... to the network which transmits same contents in messages M12, M22, ... to the destination telephone 30B. The destination telephone decodes the messages M12, M22 and then reproduces the speech. The coding used may be changed by the network 50 if necessary. If the codecs used in both telephones 30A and 30B are compatible, this is not necessary.

According one aspect of the invention, the processing unit 34 of the telephone 30A can be adapted to receive an identifier defining a destination party, such as the number of the telephone 30B, for a communication connection or a group to which the destination party of the communication connection, i.e. telephone 30B, belongs.

The processing unit 34 of the telephone 30A may further be adapted to select the sound reproduction position r that will be perceived by the user of telephone 30B as the position from where the voice of the user of telephone 30A is reproduced.

The telephone 30B can be adapted to apply the HRTF to the paging signal Sr.

The telephone 30A, the communication network 50, or the telephone 30B can be adapted to apply the HRTF with the sound reproduction position r to a voice signal Sp used for the communication connection, i.e. speech from the user of telephone 30A.

Since the paging signal Sr and voice signal Sp are usually one-channel (i.e. mono) signals, by applying a HRTF to any of them gives an at least two-channel (e.g. stereo) signal. This at least two-channel signal is then passed to headphones 100 at telephone 30B. If the paging signal Sr or voice signal Sp are originally on two or more channels, the HRTF has to be applied at least to the right and left channel.

According one aspect of the invention, the processing unit 34 of the telephone 30B is adapted to receive an identifier defining an originating party, such as telephone 30A, for a communication connection, or a group to which the originating party of the communication connection belongs.

Then the processing unit 34 of the telephone 30B is adapted to select the sound reproduction position r that will be perceived by the user of telephone 30A as the position from which the voice of the user of telephone 30B is reproduced.

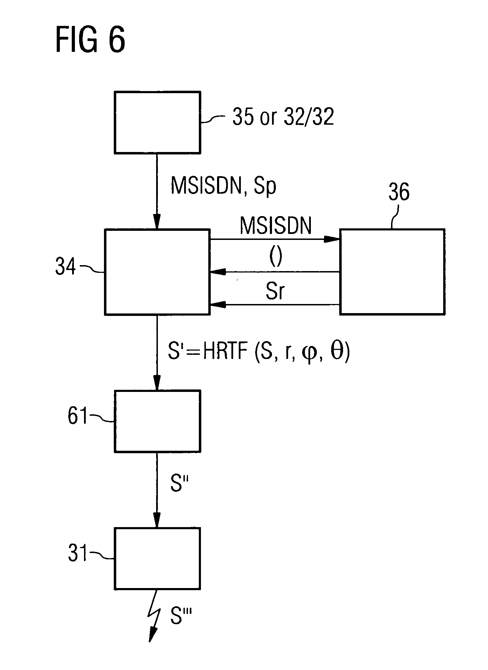

In Figure 6 identifier MSISDN defining an originating or destination party for a communication connection is received at the processing unit from the means 35 for receiving data from the communications network 50, or from input/output means 32.

Responsive to the identifier MSISDN, the processing unit 34 receives a predefined sound reproduction position r from the memory 36. The processing unit 34 may further receive a predefined paging signal Sr from the memory 36. If the processing unit 34 does not receive a predefined paging signal Sr from the memory 36, it preferably receives a voice signal Sp used for the communication connection from means 35 for receiving data from the communications network 50, or from means 33 for receiving speech of the user of the telephone 30. The paging signal Sr or speech signal Sp is in the following denoted with a common symbol for a signal S.

The processing unit 34 applies the HRTF with sound reproduction position r to the audio signal S. The thus produced digital representation S' is then converted to an analog signal, amplified in amplifier 61, and filtered. The amplified signal S" can be fed to means 31 for paging a user or for reproducing an audio signal. The representation S''' from means 31 can be received at headphones 100.

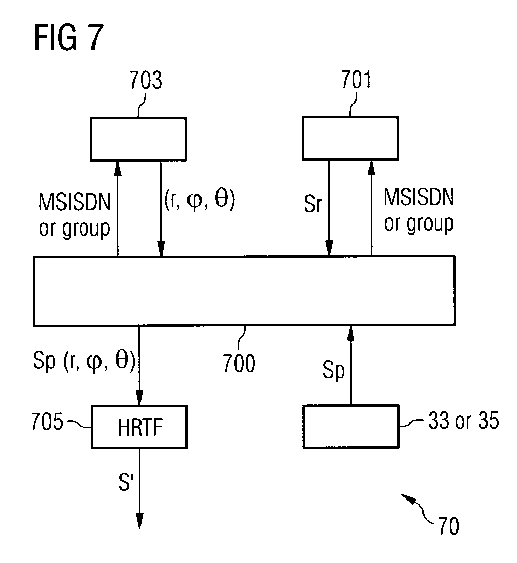

In Figure 7 a possible operation of the processing unit 34 is illustrated in more detail. The program which can be executed in the processing unit 34 comprises the main base band application 700 which takes care of monitoring the means 35 for receiving data from the communications network 50, and input/output means 32.

The program further comprises a ringing tone selection module 701 which the base band application 700 can call. The ringing tone selection module 701 selects a ringing tone Sr that is used as a paging signal Sr for paging the user. In the selection, a group identifier or an identifier (such as MSISDN) identifying the originating address is used in order to select paging signal Sr.

As an alternative to this, the program may receive through means 35 for receiving data from the communication network 50 a voice signal Sp which relates to an ongoing communication connection, such as to an ongoing call. A practical example of this is the coded speech of the other party.

As a further alternative to this, the program may receive from the means 33 for receiving speech of the user of the telephone 30 a voice signal Sp which relates to an ongoing communication connection, such as to an ongoing call. A practical example of this is the coded speech of the user of the telephone.

In practice, the interface with processing unit 34 interacts with the communication network 50, with peripherals (such as headphones 100), with input/output means 32, etc, by using suitable interfaces. These interfaces may involve device drivers and so forth, and their more detailed description can be omitted since the skilled person readily understands how to implement them.

The signal that is going to output is below denoted with S, regardless whether Sr or Sp is meant.

The program further comprises a sound reproduction position selection module 703 which the base band application 700 may call. The sound reproduction position r selection module 703 is adapted to receive an identifier defining an originating or destination party for a communication connection, such as MSISDN. Alternatively, the sound reproduction position selection module 703 may be adapted to receive an identifier GROUP defining the group to which the originating or destination party of the communication connection belongs.

Furthermore, the sound reproduction position selection module 703 is adapted to select a sound reproduction position r responsive to the identifier (MSISDN or GROUP).

The program may further comprise a sound processing module 705 which the base band application 700 may use. The base band application 700 preferably passes the signal S together with the selected sound reproduction position r to the sound processing module 705 which applies the HRTF in order to generate a digital representation S' of the signal S.

Memory 36 of the telephone 30 preferably comprises a phonebook entry 251 or a settings file 201. This memory 36 is suitable for storing a dependency between the identifier (MSISDN or GROUP) and the sound reproduction position r. In addition or as an alternative to the memory 36, a smart card (such as UMTS Subscriber Identity Module or Subscriber Identity Module) can be used for storing these data.

The HRTF can be stored in the memory or in the smart card. The latter option makes the HRTF device-independent. Alternatively, the HRTF can be stored in the communications network 50.

## Claims

1. A method, **comprising the steps of:**
- receiving an identifier (MSISDN; GROUP) defining an originating or destination party for a communication connection or a group to which the originating or destination party of the communication connection belongs; and
- selecting a sound reproduction position (r) responsive to the identifier (MSISDN; GROUP).

2. A method according to claim 1, further **comprising the step of:** generating a digital representation (S') of a paging signal (Sr) or a voice signal (Sp) used for the communication connection by applying a head-related transfer function (HRTF) with the sound reproduction position (r).

3. A method according to claim 1 or 2, further **comprising the step of:** defining and storing a relationship between an identifier (MSISDN; GROUP) defining an originating or destination party for a communication connection or a group to which the originating or destination party of a communication connection belongs and a sound reproduction position (r).

4. A method according to claim 3, further **comprising the step of**: visualizing said relationship.

5. A method according to any one of claims 1 to 4, further **comprising the step of**:
- transmitting said sound reproduction position (r), to a communication network (50); or
- transmitting said digital representation (S') to a communication network (50).

6. A method according to any one of claims 1 to 5, further **comprising the step of:**
- receiving said sound reproduction position (r); or
- receiving a digital representation (S') of a paging signal (Sr) or a voice signal (Sp).

7. A program product (70), **comprising:**
- means (703) for receiving an identifier (MSISDN; GROUP) defining an originating or destination party for a communication connection or a group to which the originating or destination party of the communication connection belongs; and
- means (703) for selecting a sound reproduction position (r) responsive to the identifier (MSISDN; GROUP).

8. A program product (70) according to claim 7, further **comprising:**
means (705) for generating a digital representation (S') of a paging signal (Sr) or a voice signal (Sp) used for the communication connection by applying a head-related transfer function (HRTF) with the sound reproduction position (r).

9. A program product (70) according to claim 7 or 8, further **comprising:** means for defining and storing a relationship between an identifier (MSISDN; GROUP) defining an originating or destination party for a communication connection or a group to which the originating or destination party of a communication connection belongs and a sound reproduction position (r) .

10. A program product (70) according to claim 9, further **comprising:** means for storing the relationship into a phonebook entry (251) or into a settings file (201) .

11. A program product (70) according to any one of preceding claims 8 to 10, further **comprising:** means for visualizing said relationship on a display (34).

12. A program product (70) according to any one of claims 7 to 11, further **comprising:**
- means for transmitting said sound reproduction position (r) to a communication network (50) interface; or
- means for transmitting said digital representation (S') to a communication network (50) interface.

13. A program product (70) according to any one of claims 7 to 12, further **comprising:**
- means for receiving said sound reproduction position (r) from a communication network (50) interface; or
- means for receiving said digital representation (S') from a communication network (50) interface.

14. A telephone (30), **comprising:** means adapted to carry out the steps of a method according to any one of claims 1 to 6, or a program product according to any one of claims 7 to 13.

15. A telephone (30) according to claim 14 **wherein:** said telephone (30) is a cellular telephone or a cordless (DECT) telephone.

16. A method, a program product (70) or a telephone (30) according to any one of the preceding claims, **wherein:** said sound reproduction position (r) is defined in head coordinates.
